# EUROPEAN PATENT APPLICATION

(11) **EP 2 772 784 A1**
(43) Date of publication of application: **03.09.2014**
(21) Application number: 12844411.4
(22) Date of filing: 29.10.2012
(51) Int. Cl.: G02B 27/22

(54) **TRANSPARENT STEREOSCOPIC IMAGE DISPLAY**

(30) Priority: 27.10.2011 KR 20110110369
(71) Applicant: Neoviewkolon Co., Ltd., Chungcheongnam-Do 350-883 (KR)
(72) Inventor: GYOUNG, Chung Hyoun, Yeoju-gun Gyeonggi-do 469-842 (KR); AN, Hui Chul, Boryeong-si Chungcheongnam-do 355-140 (KR); KIM, Dae Yong, Seoul 152-785 (KR); PARK, Il Ho, Hongseong-gun Chungcheongnam-do 350-752 (KR); LIM, Hee Sung, Hongseong-gun Chungcheongnam-do 350-801 (KR); LEE, Soo Chang, Hongseong-gun Chungcheongnam-do 350-751 (KR); IM, Woo Bin, Hongseong-gun Chungcheongnam-do 350-809 (KR)
(74) Representative: Ter Meer Steinmeister & Partner
(86) International application number: PCT/KR2012/008956
(87) International publication number: WO 2013/062395

(57) **Abstract**

The present invention relates to a transparent stereoscopic image display, and in particular, to a transparent stereoscopic image display without a barrier slit or lenticular sheet, which enables an observer to feel a sense of three-dimensionality, by assembling transparent display panels and alternately outputting a left eye image frame and a right eye image frame, and enables the resolution to be improved about two-fold when a 2-dimensional image is output.

## Description

### [Technical Field]

The present invention relates to a transparent stereoscopic image display, and more particularly, to a transparent stereoscopic image display which includes two bonded transparent display panels to alternately output a left image frame and a right image frame without a barrier slit or lenticular sheet, thereby a viewer may feel a three-dimensional effect with an increased resolution of about twice when outputting a two-dimensional image.

### [Background Art]

Since both eyes of a human being are separated from each other at a predetermined interval and may be rotated at various angles, tod-in (cross angle) and binocular disparity are generated during viewing objects. Therefore, a human being can recognize a sense of depth for objects using the binocular disparity, and thus may observe a stereoscopic image.

In this disclosure, the tod-in (cross angle) refers to an angle formed between a line of sight of left and right eyes and an object by inwardly rotating the eyes of human being, and the binocular disparity refers to a difference in amount of predetermined interval between respective images focused on the both eyes due to a distance between the both eyes of human being.

That is, the images of an object focused differently on the both eyes are synthesized in the cerebrum, thereby the viewer can feel a sense of depth around a point seeing through both eyes by the tod-in and binocular disparity.

Transparent stereoscopic image displays have been developed by using the above-described principal. That is, when left and right images having the tod-in and binocular disparity are respectively output on a two display panel of the transparent stereoscopic image display, a viewer wearing polarized glasses can observe the stereoscopic image by viewing the left and right images through the left and right eyes, respectively.

Such a polarization type transparent stereoscopic image display may have an increased resolution, but, for this, it is necessary to include two display panels disposed at an angle of 90 degrees and a half mirror arranged between the display panels to output images in the same direction. Therefore, a volume of the display is increased and wearing of polarized glasses is required for the viewer which may be an inconvenience to him or her.

Further, in order to output a two-dimensional image, the polarization type transparent stereoscopic image display operates any one of two display panels to output an image. Therefore, resolutions in a two-dimensional image and a three-dimensional image are equal to each other in this type display.

Meanwhile, in order to eliminate the inconvenience of wearing the polarized glasses, and decrease the volume of the device, stereoscopic image displays capable of refracting images by a lenticular sheet attached on a front of the display panel or forming a disparity barrier by barrier slits formed on a display panel attached thereon have been developed. In this case, the viewer may feel the three-dimensional effect by seeing a left image only through the left eye and a right image only through the right eye, respectively.

The lenticular type stereoscopic image display or the barrier type stereoscopic image display may have a decreased volume compared with the polarization type transparent stereoscopic image display, however, it is necessary to attach the lenticular sheet or an additional display panel formed with the barrier slits on the front of the display panel. Therefore, these types of displays may have a reduced brightness and, in a severe case, the brightness and resolution in the output stereoscopic image may be reduced to about half.

### [Disclosure]

### [Technical Problem]

In consideration of the above-described circumstances, the present inventors have repeatedly researched into developing a stereoscopic image display capable of improving the resolution and brightness by about twice without wearing polarized glasses, when outputting a two-dimensional image. As a result thereof, the present inventors have developed a transparent stereoscopic image display having a technical configuration capable of outputting a stereoscopic image with two bonded transparent displays, and completed the present invention.

Accordingly, it is an object of the present invention to provide a transparent stereoscopic image display capable of viewing a stereoscopic image with an increased resolution and brightness without wearing polarized glasses or shutter glasses.

In addition, another object of the present invention is to provide a transparent stereoscopic image display which may increase the resolution and brightness by about twice when outputting a two-dimensional image with a reduced volume.

Further, another object of the present invention is to provide a transparent stereoscopic image display capable of increasing the resolution of the stereoscopic image by about twice, compared with a lenticular or barrier type stereoscopic image display having the same area.

The objects of the present invention are not limited to those described above, and other objects not described in this disclosure will be clearly understood to those skilled in the art by reading the following description.

### [Technical Solution]

In order to accomplish the above objects, there is provided a transparent stereoscopic image display including: a first display panel; and a second display panel which is bonded with the first display panel, wherein, in a three-dimensional output mode, the first display panel outputs a left image, and the second display panel outputs a right image having a binocular disparity with the left image, in a two-dimensional output mode, the first display panel outputs one image of two-dimensional images, and the second display panel outputs the other image of the two-dimensional images except the one image, at least one display panel of the first display panel and the second display panel includes a transparent display panel, and pixels of the first display panel and the second display panel are arranged so as not to overlap with each other in a thickness direction thereof.

In a preferred embodiment of the present invention, the transparent stereoscopic image display further includes one or a plurality of display panels which is/are bonded with the first display panel or the second display panel.

In a preferred embodiment of the present invention, the pixels of at least one first display panel and the pixels of at least one second display panel form one three-dimensional unit pixel in the three-dimensional output mode, each pixel of the first and second display panels forms one two-dimensional unit pixel in the two-dimensional output mode, and the first and second display panels are alternately on and off in the three-dimensional output mode, while the first and second display panels are simultaneously on in the two-dimensional output mode, so that the two-dimensional image has a resolution increased by twice that of the left or left image.

In a preferred embodiment of the present invention, when the three-dimensional unit pixel is divided into equal halves in a longitudinal direction or a vertical direction, the pixels of the first display panel and the pixels of the second display panel are arranged in a different region from each other in the three-dimensional unit pixel.

In a preferred embodiment of the present invention, the pixels of each display panel include three RGB light emitting bodies, and the light emitting bodies of each pixel are spaced apart from each other, and the light emitting bodies having the same color of the pixels of the first display panel and the pixels of the second display panel are arranged out of a same line as each other in the three-dimensional unit pixel.

In a preferred embodiment of the present invention, the pixels of each display panel include three RGB light emitting bodies, and the light emitting bodies of each pixel are spaced apart from each other, and the light emitting bodies of the first display panel and the light emitting bodies of the second display panel are alternately arranged with respect to each other in the three-dimensional unit pixel, so that the light emitting bodies having the same color are arranged adjacent to each other.

In a preferred embodiment of the present invention, when the three-dimensional unit pixel is divided into equal halves in a longitudinal direction or a vertical direction, the pixels of the first display panel and the pixels of the second display panel are arranged in a different region from each other on a diagonal line in the three-dimensional unit pixel.

In a preferred embodiment of the present invention, the transparent stereoscopic image display further includes: a bonding means which is provided along an edge between the display panels to bond the display panels to each other.

In a preferred embodiment of the present invention, the transparent stereoscopic image display further includes: a getter layer which is provided between the display panels to serve as a buffer, so that light emitted from each display panel to another display panel is not blocked.

In a preferred embodiment of the present invention, the getter layer is sealed by the bonding means between the display panels.

In a preferred embodiment of the present invention, the display panels include a transparent substrate, a transparent anode electrode, a hole injection layer, a hole transporting layer, an emissive layer, an electron transporting layer, an electron injection layer, a transparent cathode electrode, and a capping layer, which are sequentially laminated, and the display panels are bonded to each other, so that the capping layers are facing each other or the capping layer of any one of the display panels and the transparent substrate of another display panel are facing each other.

In a preferred embodiment of the present invention, any one of the display panels further includes a metal reflection layer which is laminated under the emissive layer to reflect upward light emitted from the emissive layer.

In a preferred embodiment of the present invention, the metal reflection layer is laminated between the transparent anode electrode and the hole injection layer.

In a preferred embodiment of the present invention, the transparent stereoscopic image display further includes: an image processing device which is configured to alternately output the left image by the first display panel and the right image by the second display panel, respectively, and the image processing device is configured to alternately output image frames of the left and right images from the display panels.

### [Advantageous Effects]

The present invention may provide the following excellent effects.

First, according to the transparent stereoscopic image display of the present invention, since the viewer can quickly and repeatedly view the left and right images without wearing polarized glasses or shutter glasses, it is possible to provide the same effect as seeing one stereoscopic image and remove the inconvenience of wearing the glasses.

In addition, according to the transparent stereoscopic image display of the present invention, since the display is manufactured by two bonded transparent display panels, it is possible to decrease the volume of the display, compared with the polarization type transparent stereoscopic image display.

Further, according to the transparent stereoscopic image display of the present invention, it is possible to increase the resolution and brightness of the stereoscopic image by about twice, compared with a lenticular or barrier type stereoscopic image display having the same area.

Further, according to the transparent stereoscopic image display of the present invention, it is possible to increase the resolution and brightness of the stereoscopic image in the two-dimensional output mode by about twice, compared with the three-dimensional output mode.

### [Description of Drawings]

FIG. 1 is a perspective view illustrating a process of manufacturing a transparent stereoscopic image display according to a first embodiment of the present invention;
FIG. 2 is a perspective view illustrating a process of manufacturing a transparent stereoscopic image display according to a second embodiment of the present invention;
FIG. 3 is a cross-sectional perspective view illustrating the transparent stereoscopic image display according to embodiments of the present invention;
FIG. 4 is a schematic view illustrating a first pixel arrangement of the transparent stereoscopic image display according to embodiments of the present invention;
FIG. 5 is a schematic view illustrating a second pixel arrangement of the transparent stereoscopic image display according to embodiments of the present invention;
FIG. 6 is a schematic view illustrating a third pixel arrangement of the transparent stereoscopic image display according to embodiments of the present invention;
FIG. 7 is a schematic view illustrating a fourth pixel arrangement of the transparent stereoscopic image display according to embodiments of the present invention; and
FIG. 8 is a schematic view illustrating a fifth pixel arrangement of the transparent stereoscopic image display according to embodiments of the present invention.

### [Description of Reference Numerals]

100, 200: transparent stereoscopic image display
110, 210: first transparent display panel
130, 230: second transparent display panel
120, 140, 220, 240: driver IC
111, 131: transparent substrate, 112, 132: transparent anode electrode
132-1: metal reflection layer, 113, 133: hole injection layer
114, 134: hole transporting layer, 115, 135: emissive layer
116, 136: electron transporting layer, 117, 137: electron injection layer
118, 138: transparent cathode electrode, 119, 139: capping layer
150: bonding means, 160: getter layer

### [Best Mode]

Terms used the present invention are selected as general terms currently widely used in the art, however, in certain cases, a term is also arbitrarily chosen by the applicant. In this case, the meaning of these terms should be understood in consideration of the detailed description of the invention or as used therein, and not only the simple name of the terms.

Hereinafter, exemplary embodiments of the present invention will be described in detail with reference to the accompanying drawings.

However, the present invention may be embodied in many different forms and should not be construed as limited to the exemplary embodiments set forth herein. In the entire drawings, like reference numerals in the drawings denote like elements.

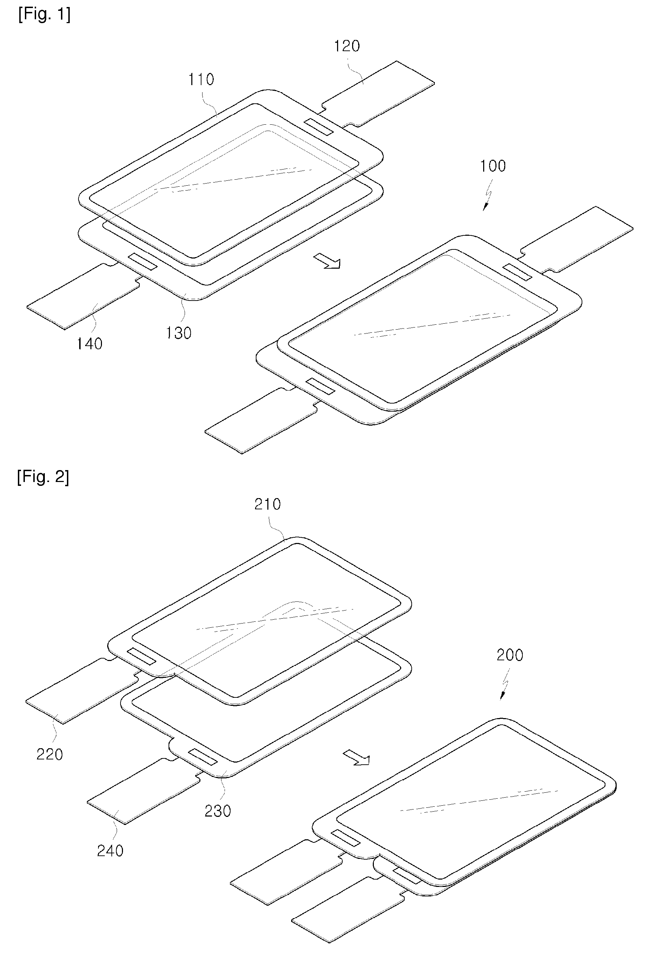

Referring to FIG. 1, a transparent stereoscopic image display 100 according to a first embodiment of the present invention includes a first transparent display panel 110 configured to output a left image, and a second transparent display panel 130 which is bonded to the first transparent display panel 110 and configured to output a right image having a predetermined binocular disparity with the left image.

However, only any one of the first and second display panels 110 and 130 may be formed as a transparent display panel.

In this case, although viewers may view a stereoscopic image or two-dimensional image only in one direction, invariably, resolution and brightness of the stereoscopic image may be improved, and resolution and brightness in the two-dimensional output mode may be increased by about twice, compared with the three-dimensional output mode.

Herein, first and second transparent display panels 110 and 130 may be liquid crystal display (LCD) panels or organic light emitting diodes (OLEDs), respectively.

In addition, the first transparent display panel 110 includes a first driver IC 120 provided at one end thereof to receive the left image, and the second transparent display panel 130 includes a second driver IC 140 provided at one end thereof to receive the right image. These first and second driver ICs 120 and 140 are oppositely disposed at opposite edge portions of the first and second transparent display panels 110 and 130 so as not to interfere with each other during bonding of these panels.

FIG. 2 is a perspective view illustrating a transparent stereoscopic image display 200 according to a second embodiment of the present invention. The transparent stereoscopic image display 200 has the same configuration as being manufactured by bonding two first and second transparent display panels 210 and 230, compared with the transparent stereoscopic image display 100 according to the first embodiment of the present invention, except that first and second driver ICs 220 and 240 are disposed at the same edge portions of the first and second transparent display panels 210 and 230.

At this time, it is preferable that any one of the first and second driver ICs 220 and 240 is disposed on one side of the edge portion of the display panel and the other one thereof is disposed on the other side of the edge portion of the display panel at a predetermined interval.

That is, the transparent stereoscopic image displays 100 and 200 according to the embodiment of the present invention have substantially the same function, except a difference in the position of the driver ICs.

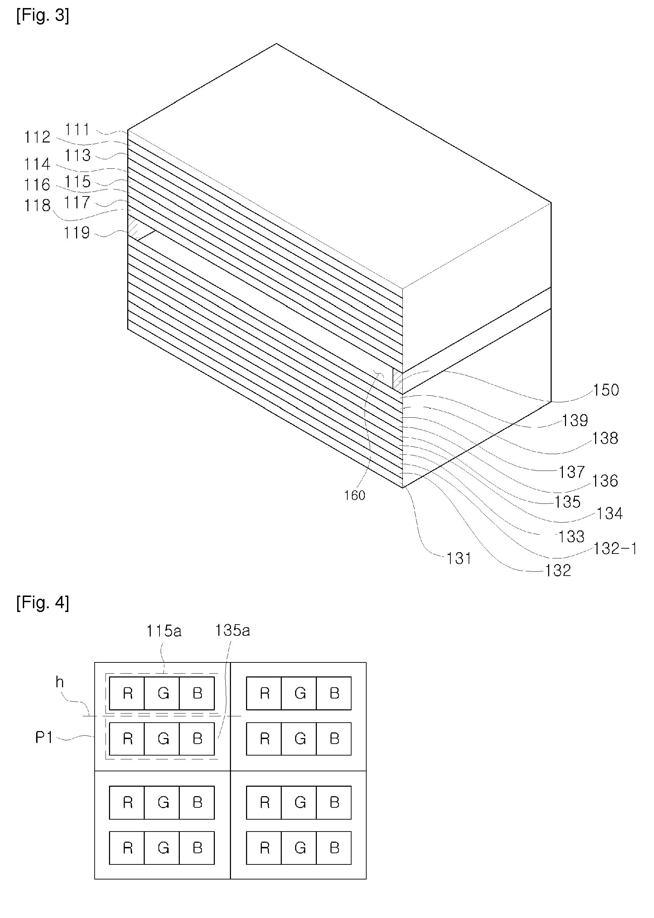

Hereinafter, components of the transparent stereoscopic image display 100 according to the first embodiment of the present invention will be described in detail with reference to FIG. 3.

The first transparent display panel 110 is configured to output the left image.

In the transparent stereoscopic image display of the present invention, the left image is identical to the left image output from a conventional transparent stereoscopic image display, but has a difference therefrom in that the left image is not an image capable of being seen only by the left eye of the human being.

In addition, the first transparent display panel 110 may include a transparent display panel such as a transparent OLED or transparent LCD, and a transparent OLED panel is employed in the embodiments of the present invention, as an example.

Further, the first transparent display panel 110 includes a transparent substrate 111, a transparent anode electrode 112, a hole injection layer (HIL) 113, a hole transporting layer (HTL) 114, an emissive layer (EML) 115, an electron transporting layer (ETL) 116, an electron injection layer (EIL) 117, a transparent cathode electrode 118, and a capping layer 119.

Herein, the transparent substrate 111 may be formed of a transparent glass material or plastic material, and supports other components. The transparent anode electrode 112 which is a positive pole may be formed of an indium tin oxide or indium zinc oxide electrode having permeability.

Holes from the transparent anode electrode 112 are injected into the hole injection layer 113, and the injected holes are transported to the emissive layer through the hole transporting layer 114. In addition, electrons from the electron injection layer 117 are transported to the emissive layer 115 through the electron transporting layer 116. The holes and electrons transported to the emissive layer 115 are coupled to emit light. The electron injection layer 117 receives the electrons from the transparent cathode electrode 118 and supplies the received electrons to the emissive layer 115.

Further, the transparent cathode electrode 118 which is a negative pole may be formed of silver, aluminum or a magnesium-silver alloy having permeability, and is closed by the capping layer 119.

The second transparent display panel 130 bonded to the first transparent display panel 110 outputs the right image having a predetermined binocular disparity with the left image.

In the transparent stereoscopic image display of the present invention, the right image is identical to the right image output from a conventional transparent stereoscopic image display, but has a difference therefrom in that the right image is not an image capable of being seen only by the right eye of the human being.

In the present invention, the right image is alternately output with the left image.

More specifically, the right image frame and the left image frame are intermittently and alternately output with each other.

Accordingly, since the viewer can quickly and repeatedly view the left and right images through both eyes, it is possible to provide the same effect as seeing one stereoscopic image.

In addition, the transparent stereoscopic image display according to embodiments of the present invention further includes an image processing device (not illustrated) which alternately outputs the right and left images, respectively.

Moreover, components of the second transparent display panel 130 may have substantially the same configuration as the first transparent display panel 110, and a capping layer 139 of the second transparent display panel 130 may be bonded to the capping layer 119 of the first transparent display panel 110 so as to face each other.

In this case, it is preferable that an image input into any one of the first and second transparent display panels 110 and 130 is inversed in the left and right directions.

Herein, the transparent stereoscopic image display according to one embodiment of the present invention may further include an image inversion circuit (not illustrated) for inverting the image.

However, when the capping layer 139 of the second transparent display panel 130 and the transparent substrate 111 of the first transparent display panel 110 are bonded so as to face each other, the display may not include the image inversion circuit.

In addition, any one of the first and second transparent display panels 110 and 130 may further include a metal reflection layer 132-1 which is provided under the emissive layer to reflect upward light emitted from the emissive layer.

In this case, the transparent stereoscopic image display 100 may be used as a single surface, and it is possible to improve the brightness.

Moreover, it is preferable that the metal reflection layer 132-1 may be laminated between a transparent anode electrode 132 and a hole injection layer 133 so as to reflect the light emitted from an emissive layer 135.

The transparent stereoscopic image display may further include a getter layer 160 which is arranged between the first transparent display panel 110 and the second transparent display panel 130 to serve as a buffer, so that the light emitted from each of the first and second transparent display panels 110 and 130 to the other transparent display panel is not blocked.

The getter layer 160 functions to protect the first and second transparent display panels 110 and 130 from a moisture and oxygen and prevent occurrence of a moire phenomenon which is generated by an interference of light due to factors such as the patterns of transparent anode electrodes 112 and 132.

In addition, the transparent stereoscopic image display further includes a bonding means 150 which is applied along an edge between the first transparent display panel 110 and the second transparent display panel 130 to bond the first and second transparent display panels 110 and 130 to each other and seal the getter layer 160 between the first and second transparent display panels 110 and 130.

Preferably, pixels of the second transparent display panel 130 are arranged so as not to overlap with the pixels of the first transparent display panel 110 in a thickness direction thereof.

In other words, when a user views the image from the front of the first transparent display panel 110, pixels of the second transparent display panel 130 are arranged so as not to be obscured by the pixels of the first transparent display panel 110, thereby enabling to view the image.

The transparent stereoscopic image displays 100 and 200 according to the embodiments of the present invention are designed to be capable of increasing the resolution of an output two-dimensional image by about twice by using two transparent display panels, respectively. However, it is possible to increase the resolution to about three times by bonding three display panels, and of course, the resolution can be increased in proportion to the number of bonded panels.

In this case, it should be noted that all the pixels of each transparent display panel are arranged so as not to overlap with each other in the thickness direction thereof.

Next, pixel arrangements of the first and second transparent display panels 110 and 130 will be described in more detail with reference to FIG. 4. The transparent stereoscopic image displays 100 and 200 according to the embodiments of the present invention may provide a three-dimensional output mode capable of outputting a stereoscopic image and a two-dimensional output mode capable of outputting a planar image. In the three-dimensional output mode, one pixel 115a of the first transparent display panel 110 and one pixel 135a of the second transparent display panel 130 form one unit pixel P1, while in the two-dimensional output mode, each pixel 115a and 135a of the first and second transparent display panels 110 and 130 form the unit pixel.

That is, since the number of the unit pixels in the two-dimensional output mode is double that of in the three-dimensional output mode, the resolution of the two-dimensional image output in the two-dimensional output mode is doubly increased compared with the left or right image output in the three-dimensional output mode.

In other words, the first and second transparent display panels 110 and 130 are alternately on and off in the three-dimensional output mode, while the first and second transparent display panels 110 and 130 are simultaneously on in the two-dimensional output mode. Therefore, the resolution of the two-dimensional image is doubled compared with the left or right image output in the three-dimensional output mode.

In the two-dimensional output mode, one two-dimensional image is divided into two, and the divided images are input into the first transparent display panel 110 and the second transparent display panel 130, respectively.

Preferably, a half or the two-dimensional image is input into the first transparent display panel 110 and the other half is input into the second transparent display panel 130.

Accordingly, since the transparent stereoscopic image display uses all two display panels in outputting the two-dimensional image, it is possible to solve the problem of decreasing the resolution, compared with a conventional polarization type transparent stereoscopic image display, and increase the resolution by about twice, compared with a conventional lenticular or barrier type stereoscopic image display having the same area.

Each pixel 115a and 135a of the first and second transparent display panels 110 and 130 includes three RGB light emitting bodies.

As illustrated in FIG. 4, when the region of the unit pixel P1 is divided into equal halves in a longitudinal direction h in the three-dimensional output mode, the pixels 115a of any one of the transparent display panels are arranged in an upper region, and the pixels 135a of the other one of the transparent display panels are arranged in a lower region so as not to overlap with each other in the thickness direction thereof.

However, the region of the unit pixel P1 is divided into equal halves, and the pixels of any one of the transparent display panels are arranged in a left region, and the pixels of the other one of the transparent display panels are arranged in a right region so as not to overlap with each other in the thickness direction thereof.

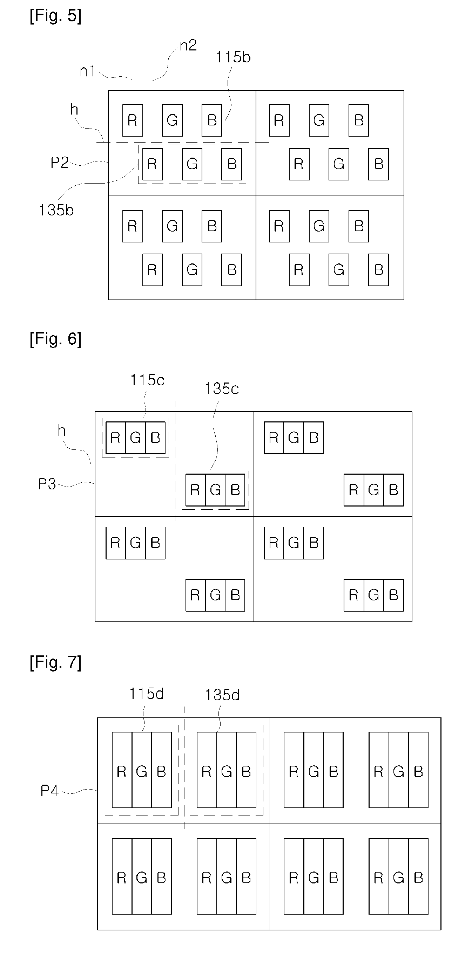

In addition, the arrangement method of a unit pixel illustrated in FIG. 5 is similar to that of FIG. 4, that is, when a unit pixel P2 is divided into equal halves in a horizontal direction h in the three-dimensional output mode, pixels 115b of any one of the transparent display panels are arranged in an upper region, and the pixels 135b of the other one of the transparent display panels are arranged in a lower region. However, the unit pixel of FIG. 5 is arranged in such a way that the light emitting bodies of each pixel are not disposed on the same vertical lines n1 and n2 as each other.

Such an arrangement method is useful for a case that each pixel of the first and second transparent display panels 110 and 130 is formed with RGB light emitting bodies spaced apart from each other.

Further, as illustrated in FIG. 6, when a unit pixel P3 is respectively divided into four regions bisecting in the horizontal direction h and vertical direction v in the three-dimensional output mode, pixels 115c and 135c of the transparent display panels may arranged in different regions from each other on a diagonal line so as not to overlap with each other in the thickness direction thereof.

Moreover, as illustrated in FIG. 7, when a unit pixel P4 is respectively divided into equal halves in the vertical direction v rather than in the horizontal direction in the three-dimensional output mode, pixels 115d and 135d of the transparent display panels 110 and 130 may arranged in different regions from each other on a diagonal line so as not to overlap with each other in the thickness direction thereof.

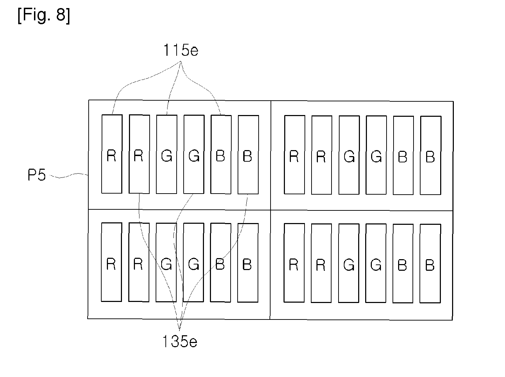

In addition, the arrangement method of a unit pixel illustrated in FIG. 8 is different from that of FIG. 7 in such a way that, when the RGB light emitting bodies of each pixel 115e and 135e are spaced apart from each other, the light emitting bodies of each pixel 115e and 135e may be alternately arranged with respect to each other in a unit pixel P5 so as not to overlap with each other in the thickness direction thereof.

That is, each of the light emitting bodies having the same color may be arranged in such a way that the unit pixel P5 has a color profile of RRGGBB in the horizontal direction.

However, the light emitting bodies may be arranged in such a way that the unit pixel P5 has a color profile of RBGGBR in the horizontal direction.

While the present invention has been described with reference to the preferred embodiments, the present invention is not limited to the above-described embodiments, and it will be understood by those skilled in the related art that various modifications and variations may be made therein without departing from the scope of the present invention as defined by the appended claims.

## Claims

1. A transparent stereoscopic image display comprising:
a first display panel; and
a second display panel which is bonded with the first display panel, wherein, in a three-dimensional output mode, the first display panel outputs a left image, and the second display panel outputs a right image having a binocular disparity with the left image,
in a two-dimensional output mode, the first display panel outputs one image of two-dimensional images, and the second display panel outputs the other image of the two-dimensional images except the one image,
at least one display panel of the first display panel and the second display panel includes a transparent display panel, and
pixels of the first display panel and the second display panel are arranged so as not to overlap with each other in a thickness direction thereof.

2. The transparent stereoscopic image display according to claim 1, further comprising one or a plurality of display panels which is/are bonded with the first display panel or the second display panel.

3. The transparent stereoscopic image display according to claim 1 or 2, wherein the pixels of at least one first display panel and the pixels of at least one second display panel form one three-dimensional unit pixel in the three-dimensional output mode,
each pixel of the first and second display panels forms one two-dimensional unit pixel in the two-dimensional output mode, and
the first and second display panels are alternately on and off in the three-dimensional output mode, while the first and second display panels are simultaneously on in the two-dimensional output mode, so that the two-dimensional image has a resolution increased by twice that of the left or left image.

4. The transparent stereoscopic image display according to claim 3, wherein, when the three-dimensional unit pixel is divided into equal halves in a longitudinal direction or a vertical direction, the pixels of the first display panel and the pixels of the second display panel are arranged in a different region from each other in the three-dimensional unit pixel.

5. The transparent stereoscopic image display according to claim 4, wherein the pixels of each display panel include three RGB light emitting bodies, and the light emitting bodies of each pixel are spaced apart from each other, and
the light emitting bodies having the same color of the pixels of the first display panel and the pixels of the second display panel are arranged out of a same line as each other in the three-dimensional unit pixel.

6. The transparent stereoscopic image display according to claim 4, wherein the pixels of each display panel include three RGB light emitting bodies, and the light emitting bodies of each pixel are spaced apart from each other, and
the light emitting bodies of the first display panel and the light emitting bodies of the second display panel are alternately arranged with respect to each other in the three-dimensional unit pixel, so that the light emitting bodies having the same color are arranged adjacent to each other.

7. The transparent stereoscopic image display according to claim 3, wherein, when the three-dimensional unit pixel is divided into equal halves in a longitudinal direction or a vertical direction, the pixels of the first display panel and the pixels of the second display panel are arranged in a different region from each other on a diagonal line in the three-dimensional unit pixel.

8. The transparent stereoscopic image display according to claim 3, further comprising: a bonding means which is provided along an edge between the display panels to bond the display panels to each other.

9. The transparent stereoscopic image display according to claim 8, further comprising: a getter layer which is provided between the display panels to serve as a buffer, so that light emitted from each display panel to another display panel is not blocked.

10. The transparent stereoscopic image display according to claim 9, wherein the getter layer is sealed by the bonding means between the display panels.

11. The transparent stereoscopic image display according to claim 3, wherein the display panels include a transparent substrate, a transparent anode electrode, a hole injection layer, a hole transporting layer, an emissive layer, an electron transporting layer, an electron injection layer, a transparent cathode electrode, and a capping layer, which are sequentially laminated, and the display panels are bonded to each other, so that the capping layers are facing each other or the capping layer of any one of the display panels and the transparent substrate of another display panel are facing each other.

12. The transparent stereoscopic image display according to claim 11, wherein any one of the display panels further comprises a metal reflection layer which is laminated under the emissive layer to reflect upward light emitted from the emissive layer.

13. The transparent stereoscopic image display according to claim 12, wherein the metal reflection layer is laminated between the transparent anode electrode and the hole injection layer.

14. The transparent stereoscopic image display according to claim 3, further comprising: an image processing device which is configured to alternately output the left image by the first display panel and the right image by the second display panel, respectively, and
the image processing device is configured to alternately output image frames of the left and right images from the display panels.
